**Europäisches Patentamt**

**European Patent Office**

**Office européen des brevets**

(19)

(11) Veröffentlichungsnummer: **0 216 154**
**B1**

(12) # EUROPÄISCHE PATENTSCHRIFT

(45) Veröffentlichungstag der Patentschrift:
24.05.89

(51) Int. Cl.⁴: **B 21 F 27/10**, B 23 K 11/32

(21) Anmeldenummer: **86111559.0**

(22) Anmeldetag: **21.08.86**

(54) Schweissmachine für aus Längs- und Querdrähten bestehende Drahtgitter mit Längsdrahtvorschubeinrichtung.

(30) Priorität: **24.08.85 DE 3530384**

(43) Veröffentlichungstag der Anmeldung:
**01.04.87 Patentblatt 87/14**

(45) Bekanntmachung des Hinweises auf die Patenterteilung:
**24.05.89 Patentblatt 89/21**

(84) Benannte Vertragsstaaten:
**AT BE CH DE FR GB IT LI LU NL SE**

(56) Entgegenhaltungen:
**EP-A- 0 073 336**
**AT-B- 326 983**
**DE-A- 3 334 043**
**DE-C- 3 327 243**
**FR-A- 1 121 488**

(73) Patentinhaber: **Baustahlgewebe GmbH,**
**Burggrafenstrasse 5, D-4000 Düsseldorf 11 (DE)**

(72) Erfinder: **Sotonyi, Thomas, Dipl.-Ing., Haupstrasse 37,**
**D-3004 Isernhagen 2 (DE)**

(74) Vertreter: **Patentanwaltsbüro Cohausz & Florack,**
**Schumannstrasse 97, D-4000 Düsseldorf 1 (DE)**

ACTORUM AG

## Beschreibung

Die Erfindung bezieht sich auf eine Schweißmaschine für aus Längs- und Querdrähten bestehende und an deren Kreuzungspunkten verschweißte Drahtgitter, insbesondere für Betonbewehrungszwecke, mit mehreren nebeneinander angeordneten und auf Schienen durch einen Antrieb einzeln verfahrbaren Schweißeinheiten, die jeweils eine Längsdrahtführung und obere und untere, aufeinander zustellbare Schweißelektroden aufweisen und denen ein Schweißtrafo zugeordnet ist, sowie mit einer angetriebenen Längsdrahtzuführung, bestehend aus oberen und unteren, aufeinander zustellbaren Klemmrollen.

Drahtgitter für Betonbewehrungszwecke unterscheiden sich nicht nur in den Längsdraht- und Querdrahtabständen, sondern auch in den Drahtdichten. Um mit einer Schweißmaschine eine möglichst große Palette verschiedenartiger Drahtgitter schweißen zu können, sollte die Schweißmaschine nicht nur hinsichtlich des Längsdrahtabstandes, sondern auch hinsichtlich der Dicke der Längs- und Querdrähte sowie des Schweißdruckes und der Schweißleistung an jeder zu schweißenden Kreuzungsstelle der Längs- und Querdrähte einstellbar sein.

Diese Forderungen werden weitgehend mit einer bekannten Schweißmaschine (DE-C1 3 327 243) erfüllt. Bei dieser Schweißmaschine sind die einzelnen Schweißeinheiten verhältnismäßig flach ausgebildet, weisen jeweils ein eigenes Organ für die Schweißdruckbeaufschlagung und einen eigenen Schweißtrafo auf, mit dem sich die Schweißleistung individuell einstellen läßt.

Um die Längsdrähte den Elektrodenpaaren der Schweißmaschine zuzuführen, sind angetriebene Längsdrahtzuführungen in Form von als Walzen ausgebildeten, zustellbaren Klemmrollen bekannt (EP-A1-0 073 336, Fig. 1). Bei solchen einen glatten Mantel aufweisenden Klemmrollen ist die seitliche Führung der Längsdrähte durch die Klemmrollen nicht gewährleistet. Hinzu kommt, daß unterschiedliche Dicken der Längsdrähte innerhalb eines Längsdrahtsatzes nicht verarbeitet werden können. Allerdings ist es mit solchen als Walzen ausgebildeten Klemmrollen möglich, die Längsdrähte in unterschiedlichen Abständen einzuklemmen, ohne daß dafür Umbauten oder Einstellarbeiten vorzunehmen sind.

Um auch Längsdrähte unterschiedlicher Dicke innerhalb eines Längsdrahtsatzes verarbeiten zu können, ist es ferner bekannt (EP-A1-0 073 336, Fig. 3), auf einer durchgehenden Antriebswelle Einzelrollen anzuordnen und diesen Einzelrollen mit einer profilierten Nut versehene, freilaufende, einzeln zustellbare Rollen zuzuordnen. Eine Einstellung auf unterschiedlichen Längsdrahtabstand ist bei diesem Stand der Technik nicht vorgesehen.

Der Erfindung liegt die Aufgabe zugrunde, eine Schweißmaschine der eingangs genannten Art zu schaffen, mit der innerhalb eines Längsdrahtsatzes Längsdrähte unterschiedlicher Dicke eingeklemmt geführt werden können und die sich auf einfache Art und Weise auf unterschiedliche Längsdrahtabstände einstellen läßt.

Diese Aufgabe wird in Verbindung mit den Merkmalen des Oberbegriffs erfindungsgemäß dadurch gelöst, daß auf der einen Seite der zuzuführenden Längsdrähte an jeder Schweißeinheit eine Klemmrolle mit einer an ihrem Umfang vorgesehenen Führungsnut frei drehbar gelagert ist und daß jede dieser Klemmrollen ein Einstellorgan aufweist und daß diesen Klemmrollen auf der anderen Seite der zuzuführenden Längsdrähte als Klemmrolle eine sich über die gesamte Verstellbreite der Schweißeinheit erstreckende, im Maschinengestell gelagerte, angetriebene Walze ohne Führungsnuten im Walzenmantel zugeordnet ist.

Bei der erfindungsgemäßen Schweißmaschine ist die Einstellung auf unterschiedliche Längsdrahtabstände denkbar einfach. Da die profilierten Klemmrollen von den einzelnen Schweißeinheiten getragen werden, werden sie zusammen mit der jeweiligen Schweißeinheit verstellt. Ihre Zuordnung zu den Längsdrahtführungen der jeweiligen Schweißeinheit bleibt erhalten. Da die angetriebene Walze keine Führungsnuten aufweist, kann jede profilierte Klemmrolle lückenlos positioniert werden, ohne daß irgendwelche Justierarbeiten zwischen den einzelnen profilierten Klemmrollen und der Walze nötig sind. An jeder möglichen Position erhält der Längsdraht eine optimale Führung. Da jeder profilierten Rolle ein Zustellorgan zugeordnet ist, lassen sich die Längsdrähte unabhängig von ihrer Dicke immer ausreichend fest einklemmen, um sicher geführt und transportiert zu werden.

Ausgestaltungen im Rahmen der Erfindung ergeben sich aus den Unteransprüchen.

Im folgenden wird die Erfindung anhand einer ein Ausführungsbeispiel darstellenden Zeichnung näher erläutert. Im einzelnen zeigen:
Fig. 1 die Schweißmaschine vor dem Positionieren der einzelnen Schweißeinheiten in Vorderansicht,
Fig. 2 die Schweißmaschine gemäß Fig. 1 nach dem Positionieren der einzelnen Schweißeinheiten in Vorderansicht,

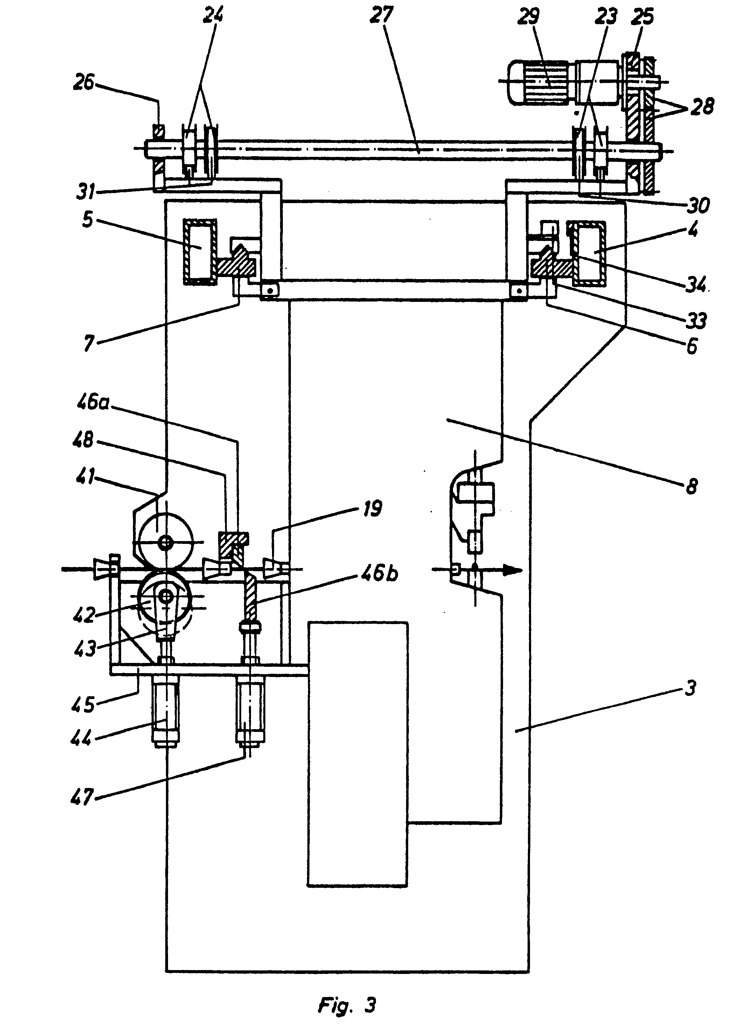

Fig. 3 die Schweißmaschine gemäß Fig. 1 im Querschnitt nach der Linie I-I der Fig. 1 und
Fig. 4 die Schweißmaschine gemäß Fig. 1 im Querschnitt nach der Linie II-II der Fig. 1.

Das Schweißmaschinengestell besteht im wesentlichen aus einem Sockel 1 und zwei Seitenständern 2, 3 sowie zwei im oberen Bereich mit großem Abstand voneinander angeordneten Trägern 4, 5 mit innenseitig angeordneten prismatischen Führungsschienen 6, 7. Zwischen den beiden Ständern 2, 3 sind mehrere flache Schweißeinheiten 8 bis 18 hängend und verfahrbar auf den Schienen 6, 7 gelagert.

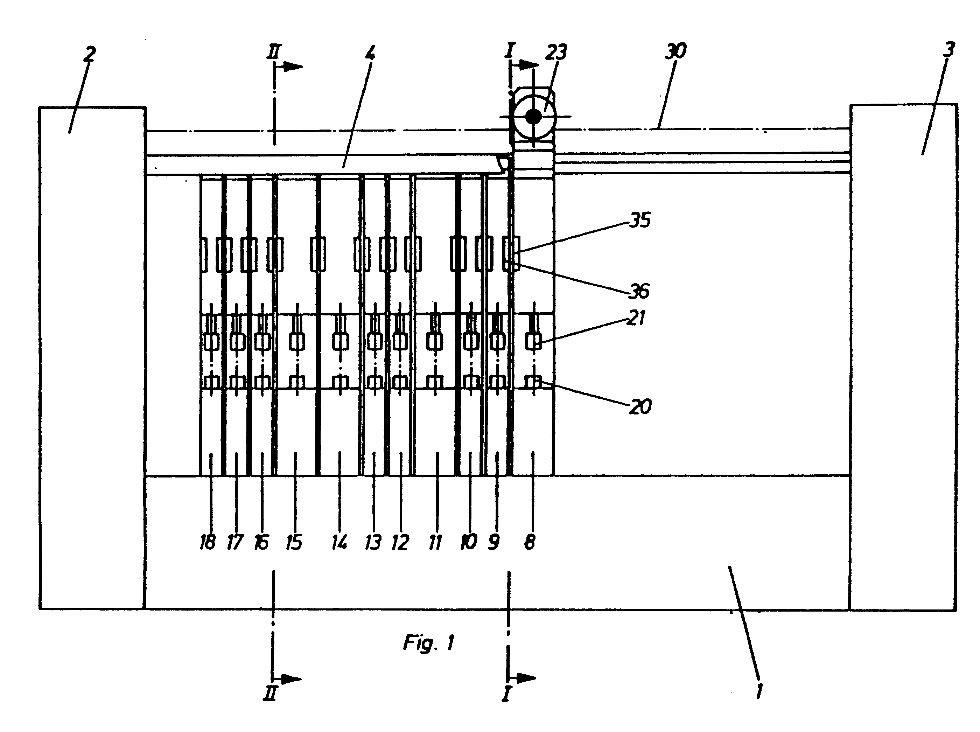

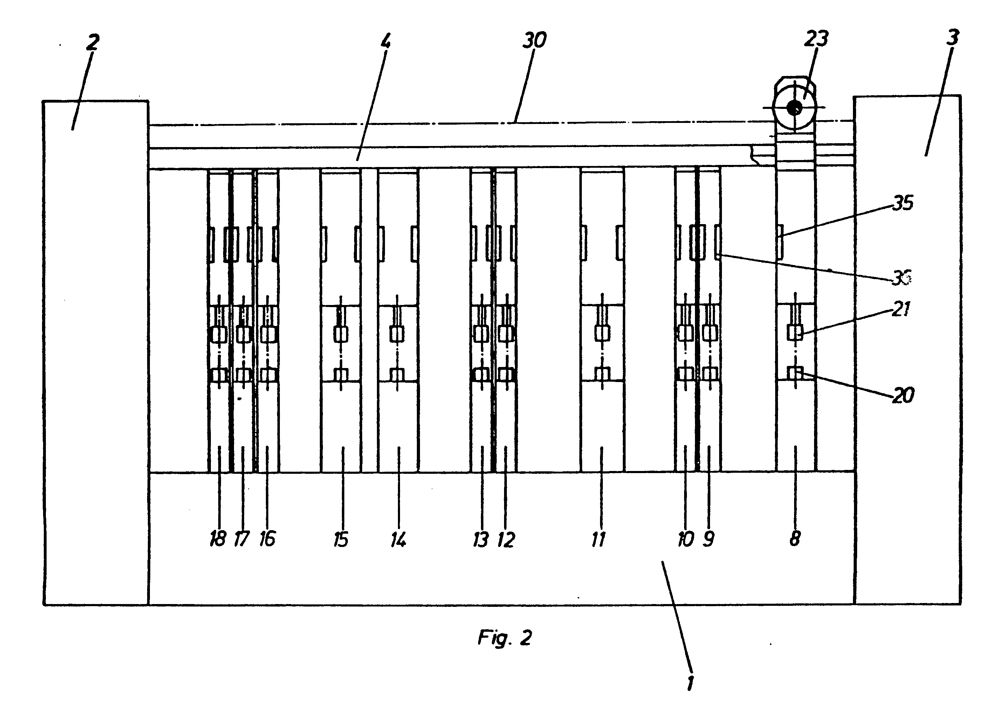

Jede Schweißeinheit besteht aus einer rohrförmigen Längsdrahtführung 19, einer unteren feststehenden Schweißelektrode 20, einer oberen, durch nicht dargestellte Betätigungsmittel heb- und senkbaren Schweißelektrode 21 und einem Schweißtrafo 22. Wie die Figuren 1 und 2 zeigen, haben die flachen Schweißeinheiten eine unterschiedliche Breite. Die unterschiedliche Breite wird erforderlich bei stark unterschiedlichen Anforderungen an Schweißleistung und -druck der einzelnen Schweißeinheit. Bei größerer Schweißleistung wird nämlich ein voluminöser Schweißtrafo benötigt. Entsprechend wird bei größerem Schweißdruck ein voluminöseres Organ, z.B. eine Zylinderkolbeneinheit, benötigt. Ein größerer Schweißdruck macht auch eine steifere Konstruktion für die Schweißeinheit erforderlich.

In Transportrichtung der Längsdrähte ist der Längsdrahtführung 19 eine Längsdrahtzuführung vorgeordnet. Die Längsdrahtzuführung besteht aus einer oberen angetriebenen Walze 41 mit ortsfester Drehachse und profilfreiem Mantel, die sich über die gesamte Verstellbreite der Schweißeinheiten 8 bis 18 erstreckt, und aus darunter angeordneten frei drehbar gelagerten und in der Höhe verstellbaren Klemmrollen 42. Die Klemmrollen 42 weisen an ihrem Umfang eine keilförmige Führungsnut auf, so daß die Längsdrähte auch ohne Führungsnuten in der oberen Walze 41 unter Klemmung sicher seitlich und in Längsrichtung geführt werden. Jeder Schweißeinheit 8 bis 18 ist eine solche Klemmrolle 42 zugeordnet. Die Klemmrolle ist in einem Lagerbock 43 frei drehbar gelagert, der von einer Zylinderkolbeneinheit 44 höhenverstellbar ist. Die Klemmrolle 42 mit ihrem Lagerbock 43 und der Zylinderkolbeneinheit 44 ist auf einer Konsole 45 angeordnet, die an dem Gehäuse einer jeden Schweißeinheit angeflanscht ist. Zwischen den Klemmrollen 41, 42 und der Längsdrahtführung 19 ist eine Drahtschere 46a, 46b zum Ablängen der Längsdrähte vorgesehen. Das obere Messer 46a ist auf einer Trägerleiste 48 starr angeordnet. Das untere Messer 46b dieser Schere wird durch eine Zylinderkolbeneinheit 47 betätigt, die auf der erwähnten Konsole 45 angeordnet ist.

Eine solche am Beispiel der Schweißeinheit 8 beschriebene Längsdrahtzuführung ist an jeder der übrigen Schweißeinheiten 9 - 18 vorgesehen.

Die Schweißeinheit 8 unterscheidet sich von allen übrigen Schweißeinheiten 9 bis 18 dadurch, daß sie einen eigenen Antrieb hat. Der Antrieb weist eine mit Wickelrollenpaaren 23, 24 bestückte, von der Schweißeinheit 8 in Lagerböcken 25, 26 getragene Welle 27 auf, die über ein Vorgelege 28 von einem Antriebsmotor 29 angetrieben wird. Auf die Wickelrollenpaare 23, 24 ist jeweils ein an den Seitenständern 2, 3 angeschlagenes Zugmittel 30, 31 aufwickelbar. Mit diesem Antrieb ist es in Abhängigkeit von der Drehrichtung also möglich, die Schweißeinheit 8 in die eine oder andere Richtung zu verfahren.

Statt dieses Antriebes könnte auch ein anderer Antrieb vorgesehen sein, z.B. zwei gemeinsam angetriebene Spindeln, an die mittels Transportmuttern die Schweißeinheit 8 gekuppelt ist. Auch wäre es denkbar, daß anstelle der Wickelrollenpaare 23, 24 auf der Welle 27 Ritzel sitzen, die jeweils in eine sich längs der Schienen 6, 7 erstreckende Zahnstange eingreifen. Schließlich bietet sich als weitere Möglichkeit an, die Zugmittel selbst anzutreiben und an diesen Zugmitteln die Schweißeinheit 8 zu befestigen.

Die angetriebene Schweißeinheit 8 weist ferner einen Wegmesser 33 auf, der beispielsweise die in gleichen Abständen auf einer ortsfest angeordneten Schiene 34 vorgesehenen Marken abzählt. Die vom Wegmesser 33 gemessene Weginformation wird an eine nicht dargestellte Steuereinrichtung weitergeleitet, die die verfahrbare Einheit 8 bestimmte Wegstrecken fahren lässt.

Die Schweißeinheiten 8 bis 18 können sich beispielsweise durch zwischen ihnen angeordnete, fernbetätigbare Verbindungselemente 35, 36 (Fig. 2) beim Zusammenfahren selbsttätig aneinanderhängen. Die Lösung dieser Verbindung ist aber nur von der Steuereinheit aus möglich.

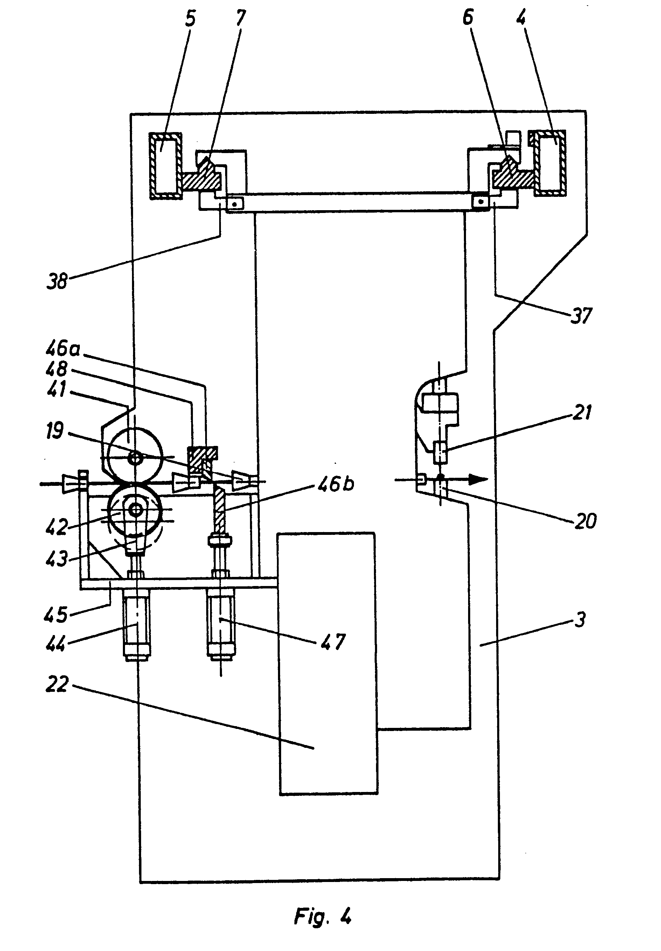

Unter der Voraussetzung, daß die Schweißmaschine mit anforderungsgemäßen Schweißeinheiten 8 - 18 ausgerüstet ist, werden die Schweißeinheiten 9 bis 18 durch die verfahrbare Schweißeinheit 8 in die Grundstellung zusammengeschoben. Dabei werden diese durch die Verbindungselemente 35, 36 miteinander fest verbunden. An der Steuereinrichtung werden dann die gewünschten Längsdrahtabstände eingestellt. Die Schweißeinheiten 9 - 18 werden wie Wagen eines Zuges von der verfahrbaren Schweißeinheit 8 mitgenommen. Dieser Zug hält in Abhängigkeit von der der Steuereinrichtung vorgegebenen Position an und löst, beginnend mit der zu verfahrenden letzten Schweißeinheit 15, an den einzelnen Stoppstellen die Schweißeinheiten 15 bis 9. Damit die Schweißeinheiten in dieser vorgenannten Position verbleiben, werden sie durch Klemmelemente 37, 38 (Fig. 4) fixiert.

Sofern nicht alle Schweißeinheiten für die Herstellung eines Drahtgitters benötigt werden, werden die überzähligen Einheiten — wenn möglich — zwischen den zum Schweißen benötigten Einheiten belassen oder aus dem Schweißbereich heraus in die Seitenräume gefahren.

Nachdem alle Schweißeinheiten 8 bis 18 mit ihren Klemmrollen 42 und Scheren 46a, 46b an die gewünschten Positionen für die Längsdrähte gefahren sind, werden die Längsdrähte eingefädelt und zwischen den Klemmrollen 41, 42 festgeklemmt. Die Klemmrollen 41, 42 können nun schrittweise die Längsdrähte vorschieben. Sofern Drahtgitter hergestellt werden sollen, in denen abschnittweise Längsdrähte fehlen, läßt sich diese Aufgabe mit der Maschine leicht dadurch erfüllen, daß durch die Schere 46a, 46b der betreffende Längsdraht abgelängt wird. Durch Herunterfahren der zugehörigen Klemmrolle 42 kann das Gitter mit den übrigen Längsdrähten dann weitertransportiert werden, während der abgelängte Längsdraht wegen Fehlens der Klemmwirkung zwischen den Klemmrollen 41, 42 nicht weitertransportiert wird.

Die erfindungsgemäß ausgebildete Schweißmaschine ermöglicht auf einfache Art und Weise und mit geringstem Aufwand sowohl den Ausbau für Reparatur- und Wartungszwecke als auch eine schnelle Umrüstung in Abhängigkeit von dem herzustellenden Drahtgitter sowohl hinsichtlich der geforderten Leistung an den zu verschweißenden Kreuzungspunkten als auch hinsichtlich der Längsdrahtabstände. Da die Schweißeinheiten 8 bis 18 auch die unteren Klemmrollen 42 tragen, ergibt sich bei einer Änderung des Längsdrahtabstandes für diese Klemmrollen keine zusätzliche Einstellarbeit. Ihre Ausrichtung bezüglich der rohrförmigen Längsdrahtführung 19 bleibt erhalten, während eine Ausrichtung auf die obere durchgehende Klemmrolle 41 sich erübrigt. Da jede einzelne untere Klemmrolle 42 höhenverstellbar ist, lassen sich in einem Längsdrahtsatz auch unterschiedliche Drahtdicken verarbeiten, ohne daß es irgendwelcher Änderungen an der Maschine bedarf.

## Patentansprüche

1. Schweißmaschine für aus Längs- und Querdrähten bestehende und an deren Kreuzungspunkten verschweißte Drahtgitter, insbesondere für Betonbewehrungszwecke, mit mehreren, nebeneinander angeordneten und auf Schienen durch einen Antrieb einzeln verfahrbaren Schweißeinheiten (8 bis 18), die jeweils eine Längsdrahtführung (19) und obere und untere, aufeinander zustellbare Schweißelektroden (21, 20) und denen ein Schweißtrafo (22) zugeordnet ist, sowie mit einer angetriebenen Längsdrahtzuführung, bestehend aus oberen und unteren, aufeinander zustellbaren Klemmrollen (41, 42), dadurch gekennzeichnet, daß auf der einen Seite der zuzuführenden Längsdrähte an jeder Schweißeinheit (8 bis 18) eine Klemmrolle (42) mit einer an ihrem Umfang vorgesehenen Führungsnut frei drehbar gelagert ist und daß jede dieser Klemmrollen (42) ein Zustellorgan (44) aufweist und daß diesen Klemmrollen (42) auf der anderen Seite der zuzuführenden Längsdrähte als Klemmrolle eine sich über die gesamte Verstellbreite der Schweißeinheiten (8 bis 18) erstreckende, im Maschinengestell gelagerte, angetriebene Walze (41) ohne Führungsnuten im Walzenmantel zugeordnet ist.

2. Schweißmaschine nach Anspruch 1, dadurch gekennzeichnet, daß zwischen der Längsdrahtführung (19) jeder Schweißeinheit (8 bis 18) und den Klemmrollen (41, 42) eine Längsdrahtschere (46a, 46b) angeordnet ist.

3. Schweißmaschine nach Anspruch 1 oder 2, dadurch gekennzeichnet, daß die im Maschinengestell gelagerte Walze (41) von den Längsdrähten abhebbar ist.

## Claims

1. A welding machine for wire meshes which consist of longitudinal and transverse wires and are welded at their points of intersection, more particularly for concrete reinforcing purposes, comprising a number of welding units (8-18) which are disposed one beside the other and can be individually moved on rails by a drive and each comprise a longitudinal wire guide (19) and have upper and lower welding electrodes (21, 20) adjusted in relation to one another and with which a welding transformer (22) is associated, the machine also having a driven longitudinal wire supply means comprising upper and lower clamping rollers (41, 42) which can be adjusted in relation one another, characterized in that mounted to rotate freely on each welding unit (8-18) on one side of the longitudinal wires to be supplied is a clamping roller (42) whose pheriphery is formed with a guide groove; each of the clamping rollers (42) has an adjusting member (44), and associated with the clamping rollers (42) on the other side of the longitudinal wires to be supplied and mounted in the machine frame is a driven clamping roller (41) extending over the whole adjusting width of the welding unit (8-18) and having no guide grooves in its generated surface.

2. A welding machine according to claim 1, characterized in that longitudinal wire shears (46a, 46b) are disposed between the longitudinal wire guide (19) of each welding unit (8-18) and the clamping rollers (41, 42).

3. A welding machine according to claims 1 or 2, characterized in that the roller (41) mounted in the machine frame can be lifted off the longitudinal wire.

## Revendications

1. Machine à souder pour un treillis en fils métalliques constituée de fils longitudinaux et transversaux soudés à leurs points de croisement, en particulier pour des buts d'armatures de béton, avec plusieurs unités de soudage (8 à 18) disposées les unes à côté des autres et mobiles individuellement sur des rails au moyen d'un entraînement, qui présentent chacune un guidage (19) pour le fil longitudinal et des électrodes de soudage (21, 20) supérieure et inférieure pouvant être rapprochées l'une de l'autre et auxquelles est adjoint un transformateur de soudage (22), ainsi qu'avec un amenage commandé de fil longitudinal constitué de rouleaux de serrage (41, 42) supérieurs et inférieurs pouvant être rapprochés les uns des autres, caractérisée en ce que, sur un côté des fils longitudinaux à amener, pour chaque unité de soudage (8 à 18), un rouleau de serrage (42) est monté à rotation libre avec une rainure de guidage prévue sur sa périphérie, et que chacun de ces rouleaux de serrage (42) présente un organe de rapprochement (44) et qu'un cylindre entraîné (41), sans rainures de guidage dans l'enveloppe de rouleau, monté dans le bâti de machine, s'étendant sur toute la largeur de déplacement des unités de soudage (8 à 18) est adjoint à ces rouleaux de serrage (42) du côté opposé aux fils longitudinaux à amener, en tant que rouleau de serrage.

2. Machine à souder selon la revendication 1, caractérisée en ce que, entre le guidage (19) pour le fil longitudinal de chaque unité de soudage (8 à 18) et les rouleaux de serrage (41, 42), est disposée une cisaille (46a, 46b) pour le fil longitudinal.

3. Machine à souder selon la revendication 1 ou 2, caractérisée en ce que le rouleau (41) monté dans le bâti de machine peut être soulevé par rapport aux fils longitudinaux.

Fig. 1

Fig. 2

**Fig. 3**

Fig. 4